Europäisches Patentamt

European Patent Office

Office européen des brevets

(19)

(11) Numéro de publication : **0 118 331**
**B1**

(12) **FASCICULE DE BREVET EUROPÉEN**

(45) Date de publication du fascicule du brevet :
21.01.87

(51) Int. Cl.⁴ : **G 02 B 27/02**

(21) Numéro de dépôt : **84400183.4**

(22) Date de dépôt : **27.01.84**

(54) **Visionneuse portable pour diapositives photographiques.**

(30) Priorité : **09.02.83 FR 8302059**

(43) Date de publication de la demande :
**12.09.84 Bulletin 84/37**

(45) Mention de la délivrance du brevet :
**21.01.87 Bulletin 87/04**

(84) Etats contractants désignés :
**BE DE NL**

(56) Documents cités :
**GB-A- 901 250**
**US-A- 3 675 354**
**US-A- 4 200 367**

(73) Titulaire : **Posso S.A.**
**121, Avenue d'Italie**
**F-75013 Paris (FR)**

(72) Inventeur : **Posso, Patrick**
**10 Avenue Jurigoz**
**CH-1006 Lausanne (CH)**

(74) Mandataire : **Caunet, Jean et al**
**Cabinet BEAU DE LOMENIE 55, rue d'Amsterdam**
**F-75008 Paris (FR)**

Jouve, 18, rue St-Denis, 75001 Paris, France

## Description

La présente invention concerne une visionneuse portable pour diapositives photographiques.

De telles visionneuses sont connues et constituées par un boîtier monolithique en matière plastique présentant une fenêtre à guides latéraux et fente extérieure d'accès pour la mise en place d'une diapositive, cette fenêtre séparant une chambre fermée par une optique de grossissement, d'un réceptacle dans lequel sont logés une source lumineuse et ses moyens d'alimentation par organes autonomes (piles, batterie...) ou par secteur après transformation.

Elles présentent l'inconvénient d'être indisponibles si, au moment de s'en servir, les piles sont déchargées et qu'il n'y a pas de prise de courant à proximité. De plus, la durée d'autonomie des piles est relativement réduite pour un usage prolongé et le prix de la consommation en piles est finalement coûteux, ce qui justifie d'ailleurs l'alimentation secteur.

La présente invention a pour but de remédier à ces inconvénients, en permettant de s'affranchir de l'alimentation électrique à chaque fois que l'on y est contraint ou qu'on le désire. Elle vise également à obtenir des effets particuliers ou spéciaux de l'image, en utilisant la lumière diffuse du jour et/ou une source d'éclairage artificielle extérieure, éventuellement associée à des caches, des filtres ou autres.

Pour atteindre ce but, et conformément à l'invention, les moyens d'alimentation et d'éclairage sont regroupés en un bloc amovible, extractable du réceptacle dans lequel il est logé et connecté, ce réceptacle présentant, en regard de l'optique, une surface réfléchissante inclinée sensiblement à 45° sur l'axe optique et destinée à renvoyer, lorsque ledit bloc est extrait, la lumière extérieure (d'une source d'éclairage artificielle ou naturelle) sur la fenêtre à diapositives.

Suivant une forme de réalisation particulièrement avantageuse, la surface réfléchissante est celle d'une paroi plane d'une pièce en matière plastique moulée, telle que du polystyrène blanc, cette pièce étant solidaire de réglettes susceptibles d'être guidées en translation à 45° dans des glissières du boîtier.

Par ailleurs, la visionneuse peut également comporter un réflecteur amovible en matière plastique moulée blanche, le réflecteur, de préférence pyramidal, présentant des réglettes latérales susceptibles d'être guidées en translation dans des glissières du bloc situées de part et d'autre de la fenêtre et ce réflecteur délimitant une ouverture pour le passage de la lampe du bloc d'éclairage dans lequel ledit réflecteur se loge.

Divers autres caractéristiques et avantages de l'invention ressortent d'ailleurs de la description détaillée qui suit.

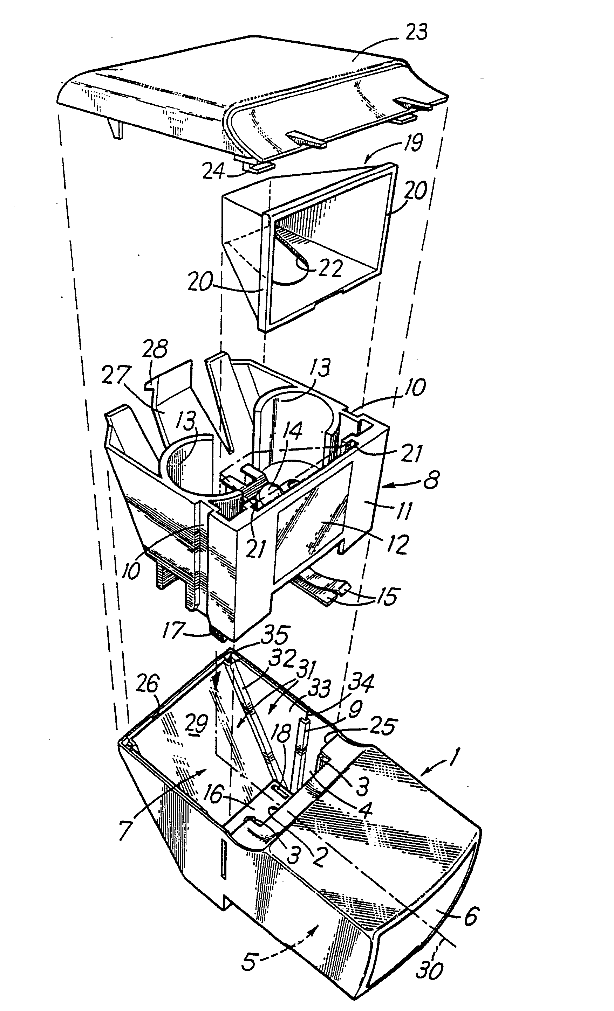

Une forme de réalisation de l'objet de l'invention est représentée, à titre d'exemple non limitatif, sur le dessin annexé dont la figure unique est une perspective en vue synoptique montrant la visionneuse conforme à l'invention.

Comme le montre le dessin, la visionneuse est constituée par un boîtier monolithique 1 en matière plastique moulée noire pour éviter les réflexions internes de la lumière. Une cloison intérieure délimite une fenêtre 2 bordée par des guides latéraux 3 pour l'introduction et l'extraction des diapositives à travers une fente d'accès 4, ces guides permettant, en outre, un positionnement suffisamment précis de la diapositive en place pour que l'image apparaisse parfaitement nette.

La cloison précitée sépare, dans le boîtier 1, une chambre noire 5 fermée par une optique de grossissement 6, d'un réceptacle 7.

Ce réceptacle 7 est destiné à recevoir un bloc amovible 8 d'éclairage et d'alimentation ; à cet effet, les parois latérales du réceptacle présentent en saillie interne des réglettes 9 et celles du bloc délimitent des rainures conjuguées 10 pour le guidage dudit bloc 8 lors de son introduction et de son extraction, ainsi que pour son positionnement précis lorsqu'il est en place dans le réceptacle ; dans cette position, la paroi frontale 11 du bloc s'étend contre (ou presque) la cloison interne précitée du boîtier et une plaquette translucide 12 dont elle est solidaire se trouve située en regard de la fenêtre 4.

Le bloc 8 comporte deux cheminées tubulaires partielles 13 dans lesquelles sont normalement logées des piles d'alimentation autonomes. Il comporte également des contacts électriques susceptibles de relier une ampoule électrique 14, soit aux piles, soit à un cordon d'alimentation, non représenté, dont le raccord neutralise les piles lorsqu'il est branché ; de toute façon, la connexion électrique de l'ampoule est commandée, quelle que soit la source d'alimentation utilisée, par un interrupteur bilame 15 qui est fermé par toute diapositive introduite à travers la fente 4 et poussée à fond le long des guides latéraux 3 entre la fenêtre 2 et la plaquette translucide 12, cet interrupteur bilame 15 étant monté en série avec un autre interrupteur bilame, sous-jacent et non visible sur le dessin, qui est commandé par un bouton-poussoir porté par le boîtier 1 et lui-même non visible.

Par ailleurs, le bloc 8 est fixé de façon démontable dans le réceptacle 7 et, à cet effet, il présente en saillie, sous sa face inférieure normalement appliquée contre un double fond 16 du boîtier, deux dents 17 de verrouillage élastique destinées à pénétrer dans des lumières conjuguées 18 de ce double fond, en s'opposant l'une à l'autre ; ces dents sont à double pente afin qu'en poussant (lors de l'introduction du bloc) ou en tirant (lors de l'extraction de ce bloc) les dents s'effacent automatiquement et par rappel élastique reviennent ensuite à leur position initiale ; dans cette position et lorsque le bloc 8 est mis en place dans le réceptacle 7, lesdites dents se verrouillent contre les bords des lumières 18 formant crans et maintiennent ledit bloc à sa place géométriquement définie face à l'optique 6.

Le bloc 8 est également muni d'un réflecteur 19 renvoyant la lumière issue de la lampe 14, à travers la diapositive placée devant la fenêtre 2, sur l'optique 6. Le réflecteur 19 doit être amovible afin de permettre notamment le changement de la lampe. Ce réflecteur est alors en matière plastique moulée blanche et, dans l'exemple représenté, sa forme est pyramidale. De toute façon, il doit être positionné avec précision relativement à la lampe et présente, à cet effet, des réglettes latérales 20 guidées en translation jusqu'à butée inférieure dans des glissières 21 du bloc situées de part et d'autre de la plaquette translucide 12 : pour le passage de la lampe 14, son pan inférieur délimite une ouverture 22.

Lorsque le bloc 8, équipé de son réflecteur 19 et garni de piles et d'une lampe, est introduit et verrouillé dans le réceptacle 7, un couvercle 23 est mis en place sur le boîtier 1. Le couvercle 23 présente, pour son positionnement, à l'avant, deux pattes d'équerre 24 s'emboîtant sous le bord 25 du boîtier 1 et, à l'arrière, un rebord descendant à retour, non visible sur le dessin, s'emboîtant dans une bordure 26 du boîtier. Pour le verrouillage de ce couvercle, le bloc 8 comporte une languette postérieure 27 déformable élastiquement et se prolongeant par une dent 28, laquelle coopère avec le retour du rebord descendant précité du couvercle.

Le bloc 8 ainsi constitué forme un ensemble amovible qu'il est possible d'extraire, lorsque le couvercle 23 est démonté, du réceptacle 7 pour en libérer l'espace intérieur. Il s'agit, en effet, dans le cas où la source d'éclairage interne est défaillante pour une raison quelconque ou bien que l'utilisateur ne disposant pas à proximité d'une prise de courant veut économiser les piles ou encore que ledit utilisateur souhaite bénéficier d'une autre luminosité d'origine extérieure, de disposer d'un moyen recevant la lumière extérieure d'en haut et la transmettant horizontalement à travers l'espace intérieur du réceptacle 7 ainsi libéré, pour qu'elle parvienne à travers toute diapositive se trouvant devant la fenêtre 2 du boîtier 1, sur l'optique 6.

Ce moyen est une surface réfléchissante 29 inclinée sensiblement à 45° sur l'axe optique 30. Ainsi, en tenant la visionneuse horizontalement devant les yeux, comme lorsque celle-ci contient le bloc 8, l'image de chaque diapositive vue à travers l'optique 6 est lumineuse, à condition cependant d'orienter l'ouverture du dessus du boîtier que dévoile le couvercle, vers le soleil ou une lampe d'éclairage artificiel.

Dans l'exemple représenté, la surface réfléchissante 29 est celle d'une paroi plane d'une pièce 31 en matière plastique moulée, telle que du polystyrène blanc. Cette pièce est un profilé en U dont les arêtes 32 joignant l'âme 29 aux ailes latérales 33 forment avec les bords libres 34 de celles-ci un angle de 45° ; les ailes 33 doublent les parois latérales du boîtier 1 et pour le maintien en place de la pièce 31, les bords 34 sont glissés dans les profilés en cornières que forment les réglettes 9 du boîtier, tandis que des profilés en U qui définissent les arêtes 32 précitées sont glissés sur des nervures 35 bordant à 45° lesdites parois latérales du boîtier.

Bien entendu, la surface réfléchissante 29 peut être réalisée d'une autre manière. En particulier, elle peut être obtenue en déposant sous vide sur la surface interne d'une paroi inclinée du boîtier 1, une fine couche métallique ou bien en appliquant sur cette paroi, une feuille métallique polie adhésive ou autre.

L'invention n'est pas limitée à la forme de réalisation représentée et décrite en détail, car diverses modifications peuvent y être apportées sans sortir de son cadre.

**Revendications**

1. Visionneuse portable pour diapositives photographiques, constituée par un boîtier monolithique (1) en matière plastique présentant une fenêtre (2) à guides latéraux (3) et fente extérieure d'accès (4) pour la mise en place d'une diapositive, cette fenêtre séparant une chambre fermée par une optique de grossissement (6), d'un réceptacle (7) dans lequel sont logés une source lumineuse (14) et ses moyens d'alimentation par organes autonomes (piles, batterie...) ou par secteur après transformation, la visionneuse étant caractérisée en ce que les moyens d'alimentation et d'éclairage sont regroupés en un bloc amovible (8), extractable du réceptacle (7) dans lequel il est logé et connecté, ce réceptacle présentant, en regard de l'optique, une surface réfléchissante (29) inclinée sensiblement à 45° sur l'axe optique (30) et destinée à renvoyer, lorsque ledit bloc est extrait, la lumière extérieure (d'une source d'éclairage artificielle ou naturelle) sur la fenêtre (2) à diapositives.

2. Visionneuse selon la revendication 1, caractérisée en ce que la surface réfléchissante (29) est celle d'une paroi plane d'une pièce (31) en matière plastique moulée, telle que du polystyrène blanc, cette pièce étant solidaire de réglettes (32) susceptibles d'être guidées en translation à 45° dans des glissières du boîtier.

3. Visionneuse selon la revendication 1 ou 2, caractérisée en ce que le bloc amovible d'éclairage (8) est muni de moyens de guidage en translation (10) coopérant avec des moyens conjugués (9) du boîtier s'étendant parallèlement à la fenêtre (2), de deux dents de verrouillage élastique (17) opposées l'une à l'autre et susceptibles de coopérer avec des crans inférieurs (18) du boîtier, ainsi que de moyens de connexion électrique sélective de la lampe (14) avec les piles ou avec un cordon d'alimentation par le secteur, ces moyens de connexion étant montés en série avec deux interrupteurs bilames du bloc susceptibles d'être commandés respectivement par une diapositive glissée dans le boîtier (pour 15) et par un bouton-poussoir de celui-ci.

4. Visionneuse selon la revendication 3, caractérisée en ce que le bloc amovible d'éclairage (8) est muni d'au moins une dent supérieure de verrouillage élastique (28) susceptible de coopérer avec un cran d'un couvercle (23) du boîtier pour le maintenir fermé.

5. Visionneuse selon la revendication 3 ou 4, caractérisée en ce que la ou les dents de verrouillage (17) sont à double pente pour leur effacement automatique à la fermeture et à l'ouverture.

6. Visionneuse selon la revendication 1, caractérisée en ce qu'elle comporte également un réflecteur amovible (19) en matière plastique moulée blanche, le réflecteur, de préférence pyramidal, présentant des réglettes latérales (20) susceptibles d'être guidées en translation dans des glissières (21) du bloc situées de part et d'autre de la fenêtre (2) et ce réflecteur délimitant une ouverture (22) pour le passage de la lampe (14) du bloc d'éclairage (8) dans lequel ledit réflecteur se loge.

## Claims

1. A portable viewer for photographic slides constituted by a monolithic housing (1) in plastic material comprising a window (2) with side guides (3) and on outer access slot (4) for positioning a slide, said window separating a chamber closed by a magnifying lens (6) from a receptacle (7) in which are housed a source of light (14) and its supplying means through independent members (batteries, battery...) or main circuit via transformer, the viewer being characterized in that the supply and lighting means are arranged in a movable unit (8), adapted to be pulled out from the receptacle (7) in which it is housed and to which it is connected, said receptacle having, opposite the lens, a reflecting surface (29) which is inclined substantially perpendicularly to form an angle of 45° with the optical axis (30) and adapted to reflect, when said unit is pulled out, the external light (of an artificial or natural source of light) on the window (2) for slides.

2. Viewer according to claim 1, characterized in that the reflecting surface (29) is the wall surface of a flat piece (31) in molded plastic material, such as white polysterene, said piece being integral with guide strips (32) adapted to be guided in translation at 45° in slide guides provided in the housing.

3. Viewer according to claim 1 or 2, characterized in that the removable light supplying unit (8) is provided with translation-guiding means (10) cooperating with conjugated means (9) of the housing extending in parallel to the window (2), of two elastically-locking teeth (17) in opposite relation one to the other and adapted to cooperate with lower slots (18) in said housing, as well as electrical means for selectively connecting the bulb (14) either to the batteries or to a power cord, said connecting means being mounted in series with two bi-metallic switches of the unit, which are controlled respectively by the action of introducing a slide into housing (for 15) and by a push-button thereof.

4. Viewer according to claim 3, characterized in that the removable lighting-unit (8) is provided with at least an upper elastically-locking tooth (28) adapted to cooperate with a notch of a cover (23) of the housing to maintain the later locked.

5. Viewer according to claim 3 or 4, characterized in that the locking tooth or teeth (17) are double-angled so that they automatically retract when pushing them in or pulling them out.

6. Viewer according to claim 1, characterized in that it also comprises a removable reflector (19) in molded white plastic material, said reflector of preferably pyramidal shape, having side strips (20) adapted to be guided in translation in slide guides (21) provided in the unit and situated on either side of the window (2), said reflector defining an opening (22) for admitting the bulb (14) of the lighting unit (8) containing said reflector.

## Patentansprüche

1. Tragbarer Diabetrachter für fotografische Diapositive, gebildet durch ein einstückiges Gehäuse (1) aus Plastikmaterial mit einem Fenster (2) mit seitlichen Führungen (3) und einem äußeren Eingangsschlitz (4) zum Inlagebringen eines Diapositivs, wobei dieses Fenster eine durch eine Vergrößerungsoptik (6) geschlossene Kammer von einem Behälter (7) trennt, in welchem sich eine Lichtquelle (14) und die Mittel zur Speisung derselben durch autonome Organe (Speicher, Batterie, ...) oder durch Netzspannung nach Transformation befinden, dadurch gekennzeichnet, daß die Mittel zur Speisung und Beleuchtung in einem abnehmbaren Block (8) gruppiert sind, welcher aus dem Behälter (7), in dem er gelagert und angeschlossen ist, entfernbar ist, wobei dieser Behälter gegenüber der Optik eine im wesentlichen um 45° zur optischen Achse (30) geneigte Reflektionsfläche (29) zum Zurückstrahlen von Außenlicht (einer künstlichen oder natürlichen Beleuchtungsquelle) an das Diapositivfenster (2), wenn besagter Block herausgenommen ist, aufweist.

2. Diabetrachter nach Anspruch 1, dadurch gekennzeichnet, daß die Reflektionsfläche (29) jene einer planen Wand eines Stücks (31) aus geformtem Plastikmaterial, wie weißem Polystyrol, ist, wobei dieses Stück mit um 45° in Gleitschienen des Gehäuses verschiebbar geführten Leisten versehen ist.

3. Diabetrachter nach Anspruch 1 oder 2, dadurch gekennzeichnet, daß der abnehmbare Beleuchtungsblock (8) mit Führungsmitteln (10) zur Verschiebung versehen ist, die mit dazugehörigen Mitteln (9) des Gehäuses, die sich parallel zum Fenster (2) erstrecken, zusammenwirken, mit zwei einander gegenüberliegenden elastischen Rastzähnen (17), die mit unteren Kerben (18) des Gehäuses zusammenwirken können, sowie mit Mitteln zur selektiven elektrischen Verbindung der Lampe (14) mit den Speichern oder mit einem Kabel zur Speisung über die Netzspannung versehen ist, wobei diese Verbindungsmittel mit zwei Bimetall-Unterbrechern des Blocks in Serie geschaltet sind, welche durch ein in das Gehäuse (bei 15) geschobenes Diapositiv bzw. durch einen Druckknopf desselben steuerbar sind.

4. Diabetrachter nach Anspruch 3, dadurch gekennzeichnet, daß der abnehmbare Beleuchtungsblock (8) mit mindestens einem oberen elastischen Rastzahn (28) versehen ist, welcher mit einer Kerbe eines Deckels (23) des Gehäuses zusammenwirken kann, um dieses geschlossen zu halten.

5. Diabetrachter nach Anspruch 3 oder 4, dadurch gekennzeichnet, daß der Rastzahn bzw. die Rastzähne (17) zum automatischen Rückstellen bei Schließen und Öffnen beidseitig geneigt sind.

6. Diabetrachter nach Anspruch 1, dadurch gekennzeichnet, daß er auch einen abnehmbaren Reflektor (19) aus weißem geformtem Plastikmaterial umfaßt, wobei der vorzugsweise pyramidenförmige Reflektor seitliche Leisten (20) aufweist, die in zu beiden Seiten des Fensters (2) befindlichen Gleitschienen (21) des Blocks verschiebbar geführt sind, und dieser Reflektor eine Öffnung (22) für den Durchtritt der Lampe (14) des Beleuchtungsblocks (8), in welchem sich der Reflektor befindet, begrenzt.